# EUROPÄISCHE PATENTSCHRIFT

(11) **EP 1 127 553 B1**
(45) Veröffentlichungstag und Bekanntmachung des Hinweises auf die Patenterteilung: **17.08.2005**
(21) Anmeldenummer: 00810143.8
(22) Anmeldetag: 21.02.2000
(51) Int. Cl.: A61C 5/06

(54) **Behälter zur Aufnahme von Füllgut und Verfahren zu dessen Herstellung**
Container for holding filling material and method of making the same
Récipient destiné à recevoir un matériau de remplissage et procédé pour sa fabrication

(43) Veröffentlichungstag der Anmeldung: 29.08.2001
(73) Patentinhaber: Coltène AG, 9450 Altstätten (SG) (CH)
(72) Erfinder: Bleuer, Richard, 9453 Eichberg (CH)
(74) Vertreter: Hepp, Dieter

(56) Entgegenhaltungen:
- EP-A- 0 043 468
- DE-A- 2 024 402
- FR-A- 1 493 708
- FR-E- 63 921
- US-A- 4 844 308

## Beschreibung

Die Erfindung betrifft einen Behälter zur Aufnahme einer vorbestimmten Menge Füllgut, vorzugsweise zur Aufnahme von pastösen Zahnfüllmassen sowie ein Verfahren zur Herstellung eines solchen Behälters mit Füllgut.

Pastöse Zahnfüllmassen werden heute in den unterschiedlichsten Mengen und Verpackungsformen abgefüllt. So werden Füllmengen, die für mehrere Applikationen ausreichen, insbesondere bei chemisch-härtenden Zahnfüllmassen, in grösseren Dosen oder Behältern abgefüllt. Das Füllmaterial wird mit einem Werkzeug, z. B. Spatel, entnommen und anwendungsgerecht portioniert. Bekannt sind aber auch Spritzen oder Tuben mit Füllmengen für mehrfache Applikationen, die über Vorrichtungen für eine anwendungsgerechte Portionierung verfügen. Der Einsatz von Verpackungen mit Füllmengen für Mehrfachapplikationen bedingt beim Anwender einen guten Grundumsatz der pastösen Zahnfüllmassen und stellt gewisse Anforderungen an die Lagerung und Hygiene.

Zwar sind Verpackungsformen für kleinere Volumina, bspw. Einfachportionen, bereits bekannt. Wegen der kleinen Volumina ist die Handhabung dieser Füllmengen bisher mit dem Einsatz technischer Hilfsmittel verbunden. So werden z. B. kleine Spitzen oder Patronen auf eine Einrichtung aufgesetzt, die über Handgriffe und einen Druckstift verfügt, mit dem über einen Abzug der Entleerungsvorgang des Füllguts aus der Spitze oder Patrone initiiert werden kann. Der Einsatz solcher technischen Hilfsmittel ist mit entsprechenden Kosten verbunden. Die Handhabung ist umständlich.

FR 63 921 E beschreibt einen Behälter mit zwei Hohlräumen und einem Zwischenstück. In den Hohlräumen befinden sich die Bestandteile zur Herstellung von Amalgam. Durch Entfernen des Zwischenstückes werden die Öffnungen der beiden Hohlräume unmittelbar zueinander ausgerichtet und die Bestandteile des Amalgams können miteinander gemischt werden. Dabei werden beide Hohlräume gleichzeitig geöffnet. Eine einfache, z.B. einhändige Handhabung des Behälters ist nicht möglich.

Aufgabe der Erfindung ist es die Nachteile des Bekannten zu vermeiden, insbesondere einen einfachen billigen Behälter bereitzustellen, der es erlaubt einerseits relativ kleine Mengen Füllgut, insbesondere pastöse Zahnfüllmassen, abzufüllen und der andererseits trotz der kleinen Volumina von Füllgut und Behälter eine optimale Handhabung gewährleistet.

Insbesondere soll eine einfache einhändige Manipulation ermöglicht werden, die gleichzeitiges Fixieren und Öffnen des Behälters erlaubt, so dass die andere Hand für eine rasche Entnahme und Applikation des Füllguts frei bleibt.

Erfindungsgemäss wird diese Aufgabe mit einem Behälter und einem Verfahren zur Herstellung eines solchen Behälters mit Füllgut gemäss den kennzeichnenden Merkmalen der unabhängigen Patentansprüche gelöst.

Ein Behälter hat einen etwa zylindrischen Grundkörper, der wenigstens einen verschliessbaren Hohlraum zur Aufnahme einer vorbestimmten Menge Füllgut, insbesondere von pastösen Zahnfüllmassen, und ein Verlängerungsstück aufweist.

Der verschliessbare Hohlraum ermöglicht das Abfüllen von Füllgut wie pastösen Zahnfüllmassen in Portionen, die zur ein- oder mehrmaligen Applikation bestimmt sind. Durch den vorzugsweise licht- und feuchtigkeitsdicht wiederverschliessbaren Verschluss sind Hygiene und gegebenenfalls Sterilität gewährleistet.

Abgefüllt werden insbesondere die heute üblicherweise im Dentalbereich verwendeten licht- oder chemisch-härtenden pastösen Zahnfüllmassen. Damit trotz des relativ kleinen Volumens des Hohlraums eine optimale Handhabung gewährleistet ist, weist der Behälter ein Verlängerungsstück auf, das nicht zur Aufnahme von Füllmaterial dient.

Der etwa zylindrische Grundkörper des Behälters kann aus einem Tubus mit durchgehend senkrecht zu den Öffnungen verlaufenden Seitenwänden gebildet sein. Denkbar sind aber auch Grundkörper mit z. B. polygonalem Querschnitt.

Wenn der Grundkörper zwei sich gegenüberliegende verschliessbare Hohlräume aufweist, können zwei vorbestimmte Mengen Füllgut abgefüllt werden und das Volumen des dazwischen liegenden Verlängerungsstückes kann bei gleichbleibender Dimensionierung und Handhabbarkeit des Behälters reduziert werden. In einem besonders bevorzugten Ausführungsbeispiel mit zwei Hohlräumen weist das Verlängerungsstück praktisch die gleiche Länge auf wie ein Hohlraum.

Wenn die Aussenwand des Verlängerungsstücks mit der Aussenwand des Behälters etwa fluchtet, lässt sich ein homogener, gut manipulier- und herstellbarer Grundkörper erzielen.
Für die Herstellung des Behälters ist ein Grundkörper der aus zwei Teilen, die kraft- und/oder formschlüssig miteinander lösbar oder unlösbar verbunden sind, besonders geeignet. Die einzelnen Teile können so insbesondere im Spritzgussverfahren aus Kunststoffen, z. B. lichtundurchlässigem Polypropylen, hergestellt werden.

Auf besonders einfache Weise kann ein Behälter zusammengestellt werden, wenn die beiden Teile je einen Verbindungsabschnitt aufweisen, wobei die Verbindungsabschnitte vorteilhaft so miteinander verbindbar sind, dass die Aussenwand des Verbindungsabschnitts des einen Teils an der Innenwand des Verbindungsabschnitts des anderen Teils kraftschlüssig anliegt.

Die beiden Teile weisen je einen verschliessbaren Hohlraum zur Aufnahme einer vorbestimmten Menge Füllgut auf, der durch einen Boden vom jeweiligen Verbindungsabschnitt abgetrennt ist. Damit wird eine funktionelle Kompartimentierung des Grundkörpers erreicht. Der Boden kann im Spritzgussverfahren einstückig mit dem Grundkörper, beispielsweise aus einem lichtundurchlässigen Polypropylen hergestellt werden. Insbesondere bei Ausführungsformen, bei denen der Boden erst nachträglich formschlüssig in den Grundkörper eingesetzt wird, kann aber auch ein weicheres Material wie z. B. Polyethylen eingesetzt werden.

In einem besonders bevorzugten Ausführungsbeispiel weist der Boden der Hohlräume jeweils einen in die Seitenwände übergehenden gekrümmten Übergangsabschnitt auf. Dadurch wird die vollständige Entnahme des Füllguts mit einem Instrument, beispielsweise mit einem Spatel, erleichtert. Besonders vorteilhaft erweist sich der gekrümmte Übergangsabschnitt in Kombination mit einem zylindrischen Grundkörper.

Das nutzbare Volumen der verschliessbaren Hohlräume beträgt bevorzugt nicht mehr als max. 0,9 cm³, vorzugsweise etwa je 0,2 cm³ bis 0,6 cm³. Dadurch wird eine für die dentale Applikation optimale Portionierung erreicht.

Damit die Handhabung des Behälters, insbesondere das Halten in der Hand, z. B. zwischen Daumen und Zeigefinger, gewährleistet ist, sollte der zylindrische Grundkörper eine minimale Länge von 20 mm aufweisen. Selbstverständlich sind in der Praxis nicht beliebig lange Grundkörper geeignet. In einem besonders bevorzugten Ausführungsbeispiel weist der zylindrische Grundkörper eine Länge von 27 mm und einen Durchmesser von 11 mm auf.

Durch einen auf den Grundkörper aufsetzbaren Schnappdeckel, der vorzugsweise licht- und feuchtigkeitsdicht verschliessbar ist, werden Hygiene und gegebenenfalls Sterilität des Füllgutes gewährleistet. Mit einem Schnappdeckel wird eine besonders einfache Handhabung, insbesondere ein leichtes Öffnen, erreicht.

Insbesondere wenn der Schnappdeckel einen Vorsprung aufweist, wird erreicht, dass der Behälter mit einer Hand gehalten und mit dem Daumen geöffnet werden kann, sodass das Füllgut mit der anderen Hand rasch mit einem Instrument, beispielsweise einem Spatel, entnommen und appliziert werden kann.

Denkbar ist auch, dass der Schnappdeckel mit seinem ganzen Umfang die Aussenwand des zylindrischen Grundkörpers überlappt.

Der Schnappdeckel kann aus dem selben Material wie der Grundkörper, beispielsweise einem lichtundurchlässigen Kunststoff wie Polypropylen gefertigt werden. Denkbar ist auch ein weicherer Kunststoff wie Polyethylen.

Ein weiterer Gegenstand der Erfindung ist ein Verbund bestehend aus zwei oder mehr erfindungsgemässen Behältern, wobei die einzelnen Behälter trennbar zusammengefügt ( z.B. in einer Reihe nebeneinander angeordnet und miteinander verbunden) sind. Ein solcher Verbund ist besonders geeignet für die Lagerung und den Transport der verhältnismässig kleinen Behälter. Die Verbindung zwischen einzelnen Behältern kann durch einstückiges Spritzen oder nachträgliches Verkleben so ausgestaltet werden, dass die Behälter, welche einzeln verbraucht werden, sich besonders leicht , z. B. durch Abdrehen, voneinander trennen lassen.

Ein weiterer Gegenstand der Erfindung ist ein Verfahren zum Herstellen und Füllen eines erfindungsgemässen Behälters, das einen vorzugsweise zylindrischen Grundkörper mit zwei Hohlräumen zur Aufnahme einer vorbestimmbaren Menge Füllgut aufweist. Kennzeichnend für das Verfahren ist, dass zwei Teile mit je einem Hohlraum bereitgestellt und anschliessend miteinander verbunden werden, so dass ein Behälter mit zwei sich gegenüberliegenden Hohlräumen entsteht. Die Hohlräume werden vor oder nach dem Verbinden mit einer vorbestimmten Menge Füllgut, insbesondere mit pastösen Zahnfüllmassen, befüllt.

Vorzugsweise wird das Verfahren so durchgeführt, dass die beiden bereitgestellten Teile zuerst gefüllt und verschlossen und erst anschliessend miteinander verbunden werden. Dadurch kann eine Rotation während des Abfüllvorgangs, die bei einem bereits zusammengesetzten Behälter notwendig würde, vermieden werden.

Die Erfindung ist im folgenden in Ausführungsbeispielen anhand der Zeichnungen näher erläutert. Diese dienen ausschliesslich der besseren Illustration einzelner erfindungsgemässer Ausführungsformen und sind keineswegs als abschliessend zu betrachten. Es zeigen:
- Figur 1: eine perspektivische Darstellung eines bevorzugten Ausführungsbeispiels eines Behälters mit den Merkmalen der Erfindung,
- Figur 2: eine perspektivische Darstellung der beiden Teile eines Behälters mit den Merkmalen der Erfindung,
- Figur 3: einen Längsschnitt durch die beiden Teile eines Behälters mit den Merkmalen der Erfindung,
- Figur 4: einen Längsschnitt durch ein alternatives Ausführungsbeispiel eines Behälters mit den Merkmalen der Erfindung, und
- Figur 5: ein Verfahren zum Herstellen eines Behälters mit Füllgut mit den Merkmalen der Erfindung.

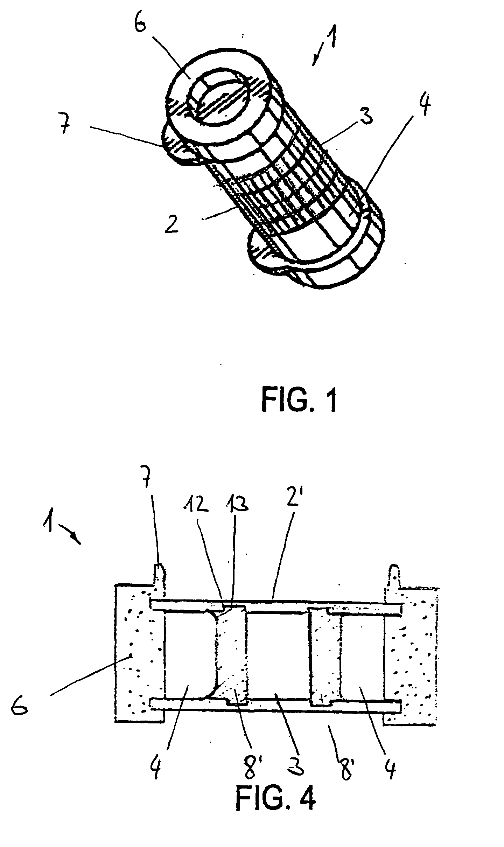

Figur 1 zeigt die perspektivische Darstellung einer besonders bevorzugten Ausführungsform. Ein länglicher Behälter 1 mit einem zylindrischen Grundkörper 2, beispielsweise aus lichtundurchlässigem Polypropylen, weist an beiden Enden je einen Hohlraum 4 auf. Die Hohlräume sind über ein Verlängerungsstück 3 miteinander verbunden. Verschlossen werden die beiden Hohlräume 4, die zur Aufnahme einer vorbestimmten Menge Füllgut 14 bestimmt sind, durch je einen Schnappdeckel 6, der zur besseren Handhabung einen Vorsprung 7 aufweist.

Besonders bewährt hat sich ein Grundkörper 2 von 27 mm Länge und 11 mm Durchmesser mit einem nutzbaren Volumen von 0,46 cm³ pro Hohlraum. Der Grundkörper 2 besteht aus zwei miteinander verbundenen Teilen A, B.

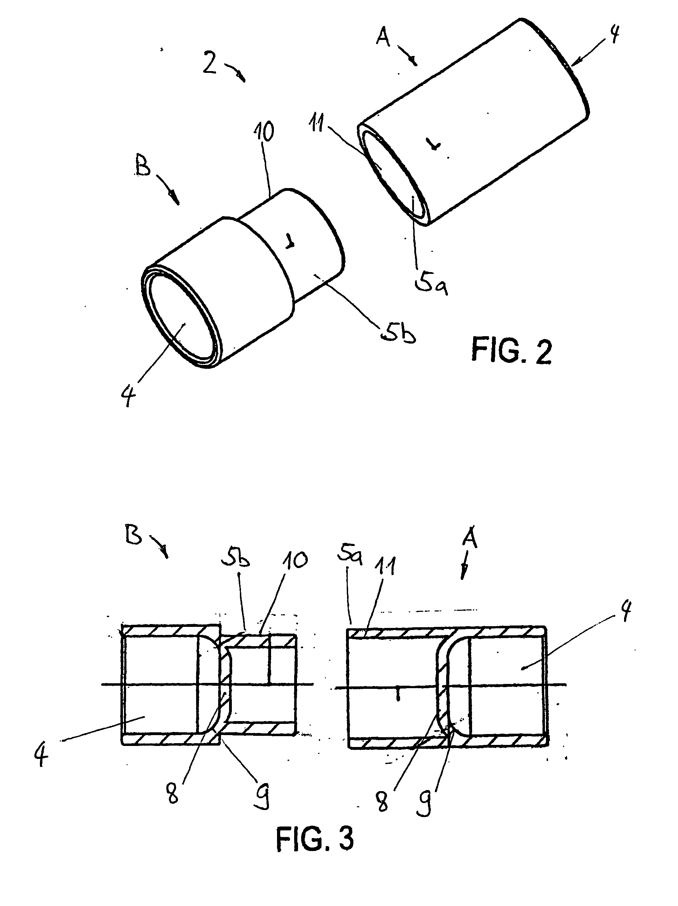

Figur 2 zeigt die beiden miteinander verbindbaren Teile A, B aus denen der Grundkörper 2 zusammengesetzt ist. Jedes Teil A, B enthält einen Hohlraum 4 für das Füllgut 14 und einen Verbindungsabschnitt 5a, 5b, wobei die Aussenwand 10 des Verbindungsabschnitts 5b des einen Teils B kraftschlüssig mit der Innenwand 11 des Verbindungsabschnitts 5a des anderen Teils A verbunden werden kann.

Figur 3 zeigt einen Längsabschnitt durch die beiden Teile, die je einen Hohlraum 4 zum Abfüllen einer vorbestimmten Menge Füllgut 14 enthalten. Der Boden 8 beider Teile weist dabei je einen gekrümmten Übergangsabschnitt 9 auf. Der Krümmungsradius beträgt ca. 2 mm. Der Aussendurchmesser des Verbindungsabschnitts 5b von Teil B ist identisch mit dem Innendurchmesser des Verbindungsabschnitts 5a von Teil A.

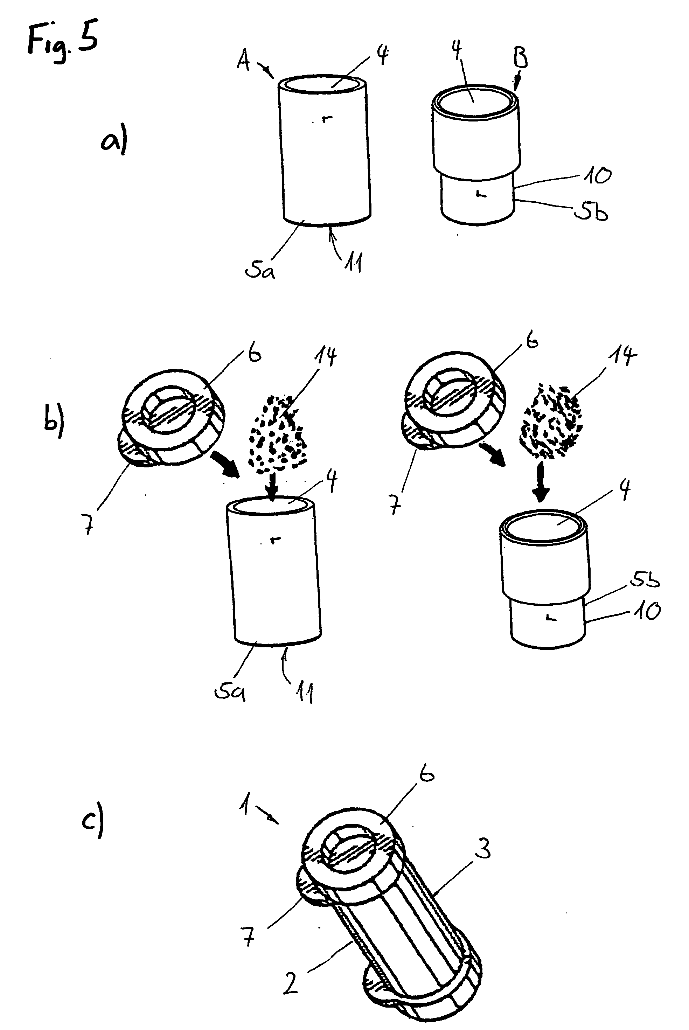

Figur 4 zeigt ein alternatives Ausführungsbeispiel im Längsschnitt. In einen zylindrischen Grundkörper 2' werden nachträglich Böden 8' eingesetzt, die über einen Flansch oder Dichtwulst 13 formschlüssig in eine umlaufende Nut 12 des Grundkörpers 2' einrastbar sind. Dadurch wird eine Kompartimentierung des Grundkörpers 2' in zwei Hohlräume 4 zur Aufnahme einer vorbestimmbaren Menge Füllgut 14 und in ein dazwischenliegendes, nicht ausgefülltes Verlängerungsstück 3 erreicht. Durch entsprechende Dimensionierung der Hohlräume 4 wird das Abfüllen kleiner Portionen zur ein- oder mehrmaligen Applikation und durch das Verlängerungsstück 3 eine gute Handhabung des Behälters 1 erreicht. Besonders günstig ist es, wenn die einsetzbaren Böden 8' aus einem weicheren Material als der Grundkörper 2' gefertigt sind.

Fig. 5 zeigt ein Verfahren zur Herstellung eines erfindungsgemässen Behälters mit Füllgut.

In Schritt a) werden zwei Teile A, B bereitgestellt, die je einen Hohlraum 4 zur Aufnahme einer vorbestimmten Menge Füllgut 14 sowie ein Verbindungsstück 5a, 5b aufweisen. Besonders vorteilhaft ist es, wenn jeder der Teile A, B im Spritzgussverfahren einstückig aus einem Kunststoff, z. B. lichtundurchlässigem Polypropylen, gespritzt wird.

In Schritt b) werden die Hohlräume 4 der beiden Teile A, B mit einer vorbestimmten Menge Füllgut, insbesondere pastösen Zahnfüllmassen, gefüllt. Das Abfüllen kann bei entsprechender Anordung der beiden Teile A, B mit einer einzigen Abfülleinheit durchgeführt werden. Die gefüllten Hohlräume 4 der beiden Teile A, B werden anschliessend verschlossen. Um ein einfaches Öffnen zu ermöglichen und um Hygiene und gegebenenfalls Sterilität des Füllguts 14 zu gewährleisten, werden vorzugsweise licht- und feuchtigkeitsdicht wiederverschliessbare Schnappdeckel 6 verwendet.

In Schritt c) werden die gefüllten und verschlossenen Teile A, B so miteinander verbunden, dass die Aussenwand 10 des Verbindungsabschnitts 5b von Teil B kraftschlüssig an der Innenwand 11 des Verbindungsabschnitts 5a von Teil A anliegt. Der so entstandene Behälter weist dadurch zwei sich gegenüberliegende Hohlräume 4 mit Füllgut 14 auf, zwischen denen ein Verlängerungsstück (3) liegt.

## Patentansprüche

1. Behälter, insbesondere zur Aufnahme von pastösen Zahnfüllmassen mit einem etwa zylindrischen Grundkörper (2), **dadurch gekennzeichnet, dass** der Grundkörper (2) zwei sich gegenüberliegende, verschliessbare, jeweils mit einem Boden (8) versehene Hohlräume (4) zur Aufnahme einer vorbestimmbaren Menge Füllgut (14) und ein zwischen den Böden (8) der beiden Hohlräume (4) angeordnetes Verlängerungsstück (3) aufweist.

2. Behälter nach Anspruch 1, **dadurch gekennzeichnet, dass** das Verlängerungsstück (3) mit der Aussenfläche des zylindrischen Grundkörpers (2) etwa fluchtet.

3. Behälter nach Anspruch 1 oder 2, **dadurch gekennzeichnet, dass** der Grundkörper (2) aus zwei Teilen (A, B) steht, die kraft- und/oder formschlüssig miteinander lösbar oder unlösbar verbunden sind.

4. Behälter nach Anspruch 3, **dadurch gekennzeichnet, dass** die beiden Teile je einen Verbindungsabschnitt (5a, 5b) aufweisen, wobei die Verbindungsabschnitte (5a, 5b) so miteinander verbindbar sind, dass die Aussenwand (10) des Verbindungsabschnittes (5b) des einen Teils (B) an der Innenwand (11) des Verbindungsabschnittes (5a) des anderen Teils (A) in Verbindungseingriff anliegt.

5. Behälter nach einem der Ansprüche 3 oder 4, **dadurch gekennzeichnet, dass** die beiden Teile (A, B) je einen verschliessbaren Hohlraum (4) zur Aufnahme einer vorbestimmten Menge Füllgut (14) aufweisen, der durch einen Boden (8) vom jeweiligen Verbindungsabschnitt (5a, 5b) abgetrennt ist.

6. Behälter nach Anspruch 5, **dadurch gekennzeichnet, dass** der Boden (8) jeweils über einen gekrümmten Übergangsabschnitt (9) in die Aussenwand übergeht.

7. Behälter nach einem der Ansprüche 1 bis 6, **dadurch gekennzeichnet, dass** das nutzbare Volumen der verschliessbaren Hohlräume (4) vorzugsweise etwa zwischen 0,2cm³ und bis höchstens 0,9 cm³ beträgt.

8. Behälter nach einem der Ansprüche 2 bis 7, **dadurch gekennzeichnet, dass** der zylindrische Grundkörper (2) mindestens eine Länge von 20mm aufweist.

9. Behälter nach einem der Ansprüche 1 bis 8, **dadurch gekennzeichnet, dass** der Behälter (1) wenigstens einen auf den Grundkörper (2) aufsetzbaren Schnappdeckeln (6) zum Verschliessen des Hohlraums (4) aufweist, insbesondere einen licht- und feuchtigkeitsdicht wiederverschliessbaren Schnappdeckel.

10. Behälter nach Anspruch 9, **dadurch gekennzeichnet, dass** der Schnappdeckel (6) einen den zylindrischen Grundkörper (2) überragenden Vorsprung (7) aufweist.

11. Behälter nach einem der Ansprüche 1 bis 10, **dadurch gekennzeichnet, dass** die Hohlräume (4) eine vorbestimmte Menge Füllgut (14), insbesondere pastöse Zahnfüllmassen, enthalten.

12. Verbund, **dadurch gekennzeichnet, dass** mehrere Behälter (1) nach einem der Ansprüche 1 bis 11 trennbar zu einem Verbund zusammengefügt sind.

13. Verfahren zum Herstellen und Füllen eines Behälters (1) mit einem etwa zylindrischen Grundkörper (2) insbesondere eines Behälters (1) nach einem der Ansprüche 1 bis 11, mit zwei sich gegenüberliegenden, verschliessbaren, jeweils mit einem Boden (8) versehenen Hohlräumen (4) zur Aufnahme einer vorbestimmten Menge Füllgut und ein zwischen den Böden (8) der Hohlräume (4) angeordnetes Verlängerungsstück (3), entsprechend den Schritten:
a) Bereitstellen von zwei Teilen, die einen Hohlraum (4) aufweisen,
b) Befüllen der Hohlräume (4) mit Füllgut (14), insbesondere mit pastösen Zahnfüllmassen,
c) Verbinden der beiden Teile vor oder nach Schritt b) zu einem Behälter (1) mit zwei sich gegenüberliegenden Hohlräumen (4).

14. Verfahren nach Anspruch 13, **dadurch gekennzeichnet, dass** Schritt b) vor Schritt c) durchgeführt wird und dass zwischen Schritt b) und c) die beiden gefüllten Hohlräume verschlossen werden.

## Claims

1. Container, in particular for holding pasty dental filling materials, having an approximately cylindrical basic body (2), **characterized in that** the basic body (2) has two sealable cavities (4) opposite one another, in each case provided with a bottom (8), for holding a predeterminable amount of contents (14) and an extension piece (3) arranged between the bottoms (8) of the two cavities (4).

2. Container according to Claim 1, **characterized in that** the extension piece (3) approximately aligns with the outer surface of the cylindrical basic body (2).

3. Container according to Claim 1 or 2, **characterized in that** the basic body (2) consists of two parts (A, B), which are connected to one another detachably or undetachably in a force-fit and/or positive-fit manner.

4. Container according to Claim 3, **characterized in that** the two parts each have a connecting section (5a, 5b), the connecting sections (5a, 5b) being connectable to one another in such a way that the outer wall (10) of the connecting section (5b) of one part (B) adjoins the inner wall (11) of the connecting section (5a) of the other part (A) in connective engagement.

5. Container according to one of Claims 3 or 4, **characterized in that** the two parts (A, B) each have a sealable cavity (4) for holding a predetermined amount of contents (14), which is separated from the connecting section (5a, 5b), in each case, by a bottom (8).

6. Container according to Claim 5, **characterized in that** the bottom (8) in each case changes into the outer wall via a curved transition section (9).

7. Container according to one of Claims 1 to 6, **characterized in that** the utilizable volume of the sealable cavities (4) is preferably approximately between 0.2 cm³ and up to at most 0.9 cm³.

8. container according to one of Claims 2 to 7, **characterized in that** the cylindrical basic body (2) has at least a length of 20 mm.

9. Container according to one of Claims 1 to 8, **characterized in that** the container (1) has at least one snap cover (6) mountable on the basic body (2) for sealing the hollow cavity (4), in particular a light- and moisture-tightly resealable snap cover.

10. Container according to Claim 9, **characterized in that** the snap cover (6) has a projecting part (7) projecting from the cylindrical basic body (2).

11. Container according to one of Claims 1 to 10, **characterized in that** the cavities (4) contain a predetermined amount of contents (14), in particular pasty dental filling materials.

12. Composite system, **characterized in that** a number of containers (1) according to one of Claims 1 to 11 are joined together separably to give a composite system.

13. Method for making and filling a container (1) having an approximately cylindrical basic body (2), in particular a container (1) according to one of Claims 1 to 11, having two sealable cavities (4) opposite one another, in each case provided with a bottom (8), for holding a predetermined amount of contents and an extension piece (3) arranged between the bottoms (8) of the cavities (4), according to the steps:
a) providing two parts which have a cavity (4),
b) filling the cavities (4) with contents (14), in particular with pasty dental filling materials,
c) connecting the two parts before or after step b) to give a container (1) having two cavities (4) opposite one another.

14. Process according to Claim 13, **characterized in that** step b) is carried out before step c) and **in that** the two filled cavities are sealed between step b) and step c).

## Revendications

1. Récipient, en particulier pour recevoir un amalgame dentaire pâteux, comprenant un corps de base (2) à peu près cylindrique, **caractérisé en ce que** le corps de base (2) présente deux cavités (4) qui sont disposées à l'opposé l'une de l'autre, qui sont aptes à être fermées, qui sont pourvues d'un fond (8) et qui sont destinées à recevoir une quantité apte à être prédéfinie de produit de remplissage (14), et un prolongateur (3) qui est disposé entre les fonds (8) des deux cavités (4).

2. Récipient selon la revendication 1, **caractérisé en ce que** le prolongateur (3) est à peu près dans l'alignement de la surface extérieure du corps de base cylindrique (2).

3. Récipient selon la revendication 1 ou 2, **caractérisé en ce que** le corps de base (2) se compose de deux parties (A, B) qui sont reliées par force et/ou par complémentarité de forme de manière amovible ou non amovible.

4. Récipient selon la revendication 3, **caractérisé en ce que** les deux parties ont chacune une section de liaison (5a, 5b), ces sections de liaison (5a, 5b) étant aptes à être reliées de telle sorte que la paroi extérieure (10) de la section de liaison (5b) d'une partie (B) soit en contact de liaison contre la paroi intérieure (11) de la section de liaison (5a) de l'autre partie (A).

5. Récipient selon la revendication 3 ou 4, **caractérisé en ce que** les deux parties (A, B) ont chacune une cavité (4) apte à être fermée, destinée à recevoir une quantité prédéfinie de produit de remplissage (14), qui est séparée de la section de liaison (5a, 5b) par un fond (8).

6. Récipient selon la revendication 5, **caractérisé en ce que** le fond (8) se prolonge par la paroi extérieure par l'intermédiaire d'une section de transition courbe (9).

7. Récipient selon l'une des revendications 1 à 6, **caractérisé en ce que** le volume utile des cavités (4) aptes à être fermées est de préférence situé environ entre 0, 2 cm³ et 0,9 cm³ au maximum.

8. Récipient selon l'une des revendications 2 à 7, **caractérisé en ce que** le corps de base cylindrique (2) a au moins une longueur de 20 mm.

9. Récipient selon l'une des revendications 1 à 8, **caractérisé en ce que** le récipient (1) présente au moins un couvercle à déclic (6) apte à être posé sur le corps de base (2) et destiné à fermer la cavité (4), en particulier un couvercle à déclic apte à être refermé de manière étanche à la lumière et à l'humidité.

10. Récipient selon la revendication 9, **caractérisé en ce que** le couvercle à déclic (6) présente une saillie (7) qui dépasse du corps de base cylindrique (2).

11. Récipient selon l'une des revendications 1 à 10, **caractérisé en ce que** les cavités (4) contiennent une quantité prédéfinie de produit de remplissage (14), en particulier des amalgames dentaires pâteux.

12. Ensemble **caractérisé en ce que** plusieurs récipients (1) selon l'une des revendications 1 à 11 peuvent être assemblés de manière séparable pour former un ensemble.

13. Procédé pour fabriquer et remplir un récipient (1) comprenant un corps de base (2) à peu près cylindrique, en particulier un récipient (1) selon l'une des revendications 1 à 11, présentant deux cavités (4) qui sont disposées à l'opposé l'une de l'autre, qui sont aptes à être fermées, qui sont pourvues d'un fond (8) et qui sont destinées à recevoir une quantité prédéfinie de produit de remplissage, et un prolongateur (3) qui est disposé entre les fonds (8) des deux cavités (4), suivant les étapes qui consistent à :
a) préparer deux éléments qui présentent une cavité (4),
b) remplir les cavités (4) avec le produit de remplissage (14), en particulier avec des amalgames dentaires pâteux,
c) relier les deux éléments avant ou après l'étape b) pour former un récipient (1) présentant deux cavités (4) opposées.

14. Procédé selon la revendication 13, **caractérisé en ce que** l'étape b) est exécutée avant l'étape c) et **en ce qu'**entre les étapes b) et c), on ferme les deux cavités remplies.
